Europäisches Patentamt

European Patent Office

Office européen des brevets

(11) Numéro de publication: **0 323 352**
**A1**

## (12) DEMANDE DE BREVET EUROPEEN

(21) Numéro de dépôt: 88403339.0

(22) Date de dépôt: 27.12.88

(51) Int. Cl.⁴: **H 02 G 3/00**

(30) Priorité: 29.12.87 FR 8718267

(43) Date de publication de la demande:
05.07.89 Bulletin 89/27

(84) Etats contractants désignés:
AT BE CH DE ES FR GB GR IT LI LU NL SE

(71) Demandeur: **Nozick, Jacques E.**
**C.T.M. 28 rue Broca**
**F-75005 Paris (FR)**

(72) Inventeur: **Allin, Jean-Claude**
**102, rue Claude Benard**
**F-95610 Eragny (FR)**

**Nozick, Jacques**
**28, rue Broca**
**F-75005 Paris (FR)**

(74) Mandataire: **Pinguet, André**
**CAPRI 28 bis, avenue Mozart**
**F-75016 Paris (FR)**

(54) Dispositif de câblage des réseaux basse tension et très basse tension d'un bâtiment.

(57) Dans un bâtiment en postes de travail potentiel (A1, A2), chaque poste est muni d'au moins une prise d'alimentation basse tension (12), d'au moins une prise téléphonique (11) et d'au moins une prise informatique (10). La prise d'alimentation basse tension (12) est reliée à un bus d'alimentation basse tension (30). Les prises téléphonique et informatique font partie d'un élément de précâblage comportant en outre un câble (1) comprenant au moins deux paires de fils pour l'établissement respectif d'une liaison téléphoniques et d'une liaison informatique, ainsi qu'un module de raccordement (2).

Cet élément de précâblage (1, 2, 10, 11), qui est entièrement fabriqué en usine, permet de réaliser le câblage systématique, banalisé et reconfigurable de tout type de bâtiment.

Fig 2

EP 0 323 352 A1

**Description**

## DISPOSITIF DE CABLAGE DES RÉSEAUX BASSE TENSION ET TRES BASSE TENSION D'UN BATIMENT

La présente invention a pour objet un dispositif de précâblage des réseaux basse tension et très basse tension d'un bâtiment.

Lorsqu'on bâtit ou qu'on rénove un bâtiment, et en particulier, un bâtiment à usage professionnel, il est avantageux de le doter de réseaux précâblés (réseau d'énergie basse tension pour l'alimentation des appareils électriques, des éclairages, etc ; réseau très basse tension pour les liaisons téléphoniques et informatiques) qui soient à la fois "systématiques","banalisés","reconfigurables". Un réseau de prècâblage est dit "systématique" lorsque, un bâtiment -ou une zone d'un bâtiment- ayant été divisé en postes de travail potentiels, chacun de ces postes est muni d'un nombre approprié de possibilités de branchement. Un réseau de précâblage est dit "banalisé" lorsque tous les câbles utilisés sont identiques et propres à l'établissement de tous types de liaisons. Enfin, un réseau de précâblage est dit "reconfigurable" lorsque les branchements, liaisons et les connexions qu'il permet d'établir peuvent être modifiés à volonté sans que sa structure même ne subisse aucun changement. L'intérêt des dispositifs de précâblage de ce type, par rapport aux câblages traditionnels effectués au coup par coup, au fur et à mesure des besoins, est multiple :
- ils permettent l'adaptation instantanée des bâtiments aux évolutions des structures humaines qu'ils abritent ;
- ils n'exigent, ni pour leur mise en place, ni pour leur exploitation ultérieure, de personnel très qualifié ;
- ils sont fiables, l'utilisation de câbles identiques facilitant la vérification systématique de tout un dispositif à l'aide d'un seul appareil de test et permettant le remplacement des éléments défectueux par échange standard ; et
-ils sont économiques car le surcroît de coût qu'ils occasionnent au moment de leur installation par rapport à un câblage traditionnel minimal est rapidement compensé par le coût des extensions et des adaptations qu'exige un tel câblage pour répondre à des besoins nouveaux.

Un dispositif de câblage systématique, banalisé, reconfigurable du réseau très basse tension téléphonique et/ou informatique d'un bâtiment est décrit dans la demande de brevet français n°2.609.218. Selon cette demande, dans un bâtiment divisé en un certain nombre de postes de travail, au moins un élément de précâblage est filé entre chaque poste de travail et un local de sous-répartition. Le local de sous-répartition contient au moins deux sous-répartiteurs (l'un étant réservé aux liaisons téléphoniques, l'autre aux liaisons informatiques), au moyen desquels chacun des postes de travail peut être relié à n'importe quel autre poste de travail. Un sous-répartiteur se compose de l'assemblage de modules de raccordement comportant chacun un certain nombre de paires de contacts. Tous les éléments de précâblage sont identiques et sont constitués d'un câble comprenant plusieurs paires de fils et connecté à une de ses extrémités à un module disposé dans le local de sous-répartition où ses fils sont connectés aux modules des deux sous-répartiteurs différents. L'autre extrémité de l'élément de précâblage est connectée à une barrette de contacts, ladite barrette comprenant au moins autant de contacts que le câble comprend de fils.

L'extrémité de l'élément de précâblage connectée à la barrette de contacts est disposée dans un poste de travail où elle est susceptible d'être reliée, par les contacts de ladite barrette, à des moyens de branchement (prises informatiques, téléphoniques, etc.). Selon ce brevet, un bâtiment peut être divisé en plusieurs zones qui sont desservies chacune par un local de sous-répartition. Dans ce cas, le sous-répartiteurs des différentes zones sont reliés entre eux par des câbles appelés "rocades".

Le dispositif de câblage dont les caractéristiques viennent d'être brièvement rappelées permet donc de doter un bâtiment d'un réseau très basse tension systématique, banalisé et reconfigurable. Il ne répond cependant pas exactement aux besoins existants, puisqu'il ne permet d'équiper qu'incomplètement les postes de travail, lesquels requièrent obligatoirement une alimentation en courant basse tension. En outre, il nécessite pour sa mise en place une main d'oeuvre relativement importante puisque les éléments de précâblage utilisés doivent être ajustés en longueur et connectés à leurs deux extrémités, d'une part à des moyens de branchement (prises informatiques, téléphoniques), d'autre part aux modules de raccordement d'un sous-répartiteur. Cette seconde manipulation, en particulier, ne va pas de soi dans la mesure où la demande de brevet précitée prévoit, dans chaque local de sous-répartition, deux sous-répartiteurs différents, l'un étant affecté aux liaisons informatiques, l'autre aux liaisons téléphoniques.

La présente invention a pour but de combler les lacunes des systèmes de câblage connus du type de celui qui a été évoqué plus haut. Elle a en effet pour objet un dispositif de précâblage des réseaux basse tension et très basse tension d'un bâtiment comportant en particulier des éléments de précâblage entièrement fabriqués en usine et prêts à l'utilisation.

L'invention prévoit, un dispositif de câblage du réseau très basse tension téléphonique et informatique et du réseau d'énergie basse tension d'un bâtiment divisé en postes de travail dans lequel chaque poste de travail est muni d'au moins une prise d'alimentation basse tension reliée à un bus d'alimentation basse tension, d'au moins une prise téléphonique et d'au moins une prise informatique, une liaison téléphonique pouvant être établie entre deux postes quelconques par l'intermédiaire d'un sous-répartiteur, d'un répartiteur téléphonique général et d'un autocommutateur, une liaison informatique pouvant être établie entre au moins deux postes quelconques et/ou entre un poste quelconque et un local technique (centre de calcul, par exemple) par l'intermédiaire d'au moins un sous-répartiteur, un même sous-répartiteur étant utilisé pour l'établissement des liaisons téléphoniques et informatiques entre deux postes quelconques.

La présente invention, a pour objet un élément de précâblage téléphonique et informatique comportant :

· un câble comprenant au moins une paire de fils pour l'établissement d'une liaison téléphonique et au moins une paire de fils pour l'établissement d'un liaison informatique,

· au moins une prise pour le branchement d'un matériel téléphonique et au moins une prise pour le branchement d'un matériel informatique, lesdites prises étant connectées à une extrémité des paires de fils correspondantes dudit câble, et

· un module de raccordement comprenant au moins autant de paire de contacts que ledit câble comprend de paires de fils, toutes lesdites paires de fils téléphoniques et d'informatique étant connectées au même module.

Selon l'invention, chaque poste de travail d'un bâtiment est relié au sous-répartiteur qui le dessert par un tel élément de précâblage, fabriqué entièrement en usine, et mis en place sans opérer de connexions. Un sous-répartiteur est constitué par le regroupement des modules.

D'autres caractéristiques et avantages de la présente invention apparaîtront mieux à la lecture de la description qui va suivre, faite en relation aux dessins annexés, sur lesquels :

la figure 1 est une représentation schématique du câblage très basse tension d'un zone d'un bâtiment divisé en postes de travail ;

la figure 2 est une représentation schématique du câblage basse tension et très basse tension d'un poste de travail ;

la figure 3 est une vue en élévation, partiellement en coupe, d'un module faisant partie d'un élément de précâblage selon l'invention ;

la figure 4 est une vue en plan schématique du module de la figure 3 ; et

la figure 5 est une vue en coupe d'un exemple de câble joignant un poste de travail à un module (câble 1 sur la figure 1).

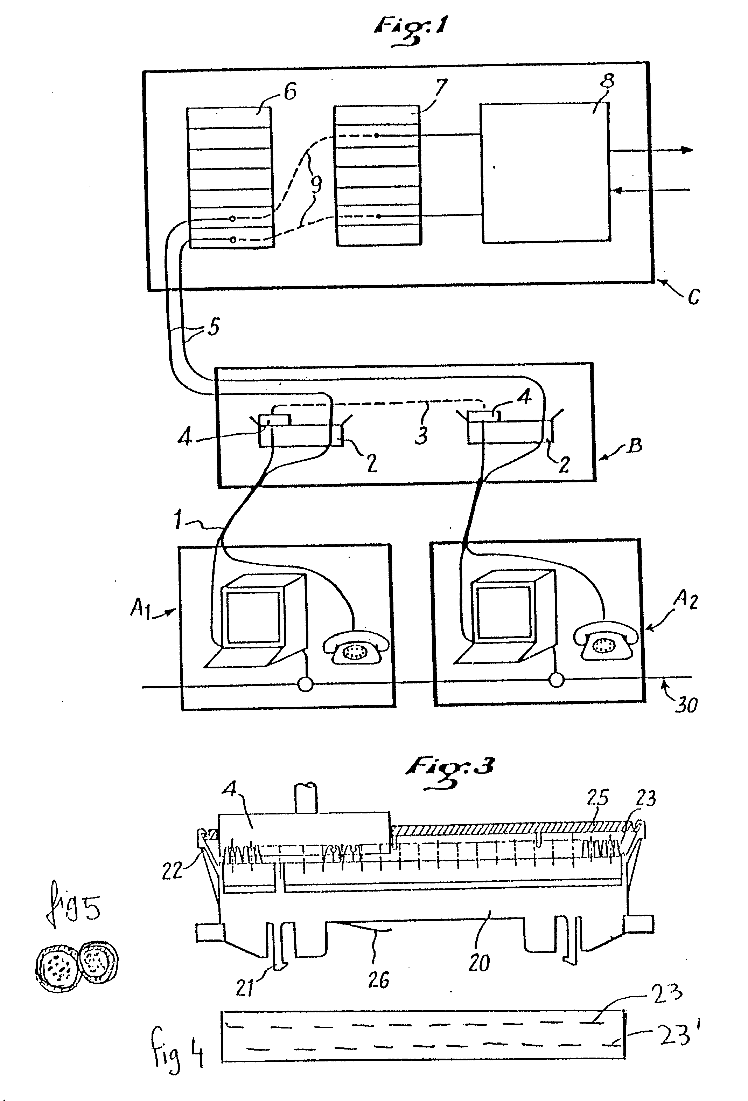

Sur la figure 1, on a représenté un schéma du câblage très basse tension d'une zone d'un bâtiment, telle qu'un étage par exemple, divisée en un certain nombre de postes de travail A1, A2 desservis par un même local de sous-répartition B ou par un même local technique (centre de calcul, par exemple). Sur ce schéma, les matériels concentrés dans une même aire spatiale (postes de travail A1, A2, local de répartition B, central téléphonique C) sont entourés d'un cadre en trait épais, les liaisons fixes sont représentées en trait continu fin et les liaisons amovibles sont représentées en trait interrompu fin.

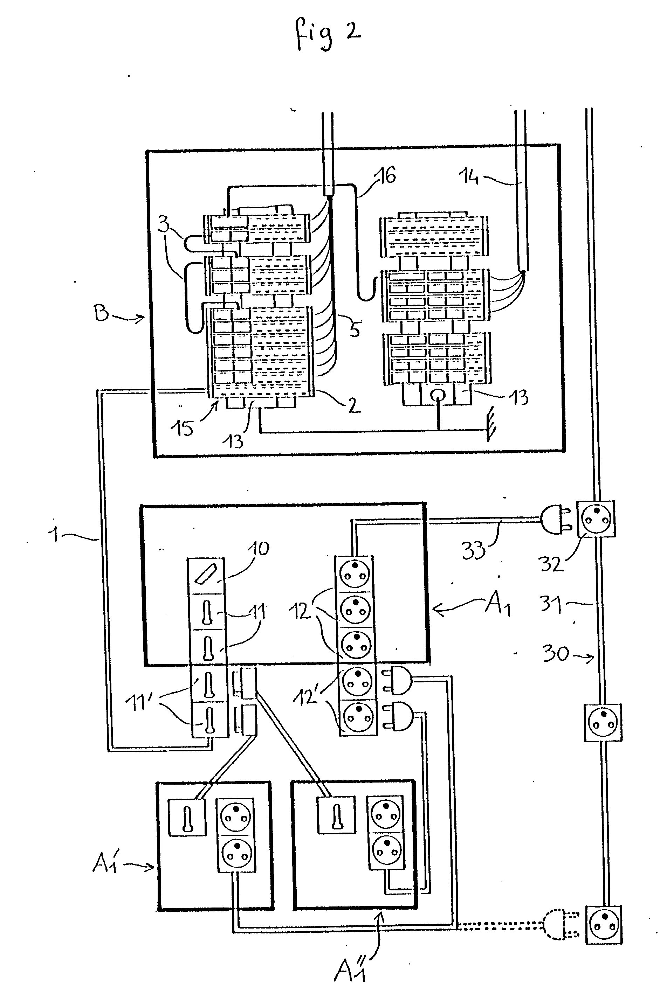

Selon l'invention, entre chaque poste de travail A1, A2 et le local de sous-répartition B ou local technique correspondant, est filé un élément de précâblage comportant un câble 1 connecté à une de ses extrémités, à un certain nombre de prises - auxquelles sont branchés divers matériels (un micro-ordinateur et un combiné téléphonique sur la figure)- et, à son autre extrémité, à un module de raccordement 2. Cet élément de précâblage, dont les constituants sont décrits en détail plus loin, est fabriqué intégralement en usine. La longueur du câble 1 reliant les différentes prises au module de raccordement 2 n'est donc pas ajustée au trajet exact séparant chaque poste de travail A1, A2 du local de sous-répartition B correspondant. On prévoit en effet de fabriquer des éléments de précâblage de différentes longueurs (dix, quinze, vingt mètres, etc., par exemple) et, è la mise en place, d'utiliser, pour un trajet de câblage donné, l'élément de précâblage dont la longueur est immédiatement supérieure audit trajet, l'excédent de câble étant lové au niveau du poste de travail. Cette préfabrication totale des éléments de précâblage permet de réaliser un gain de main d'oeuvre considérable, c'est-à-dire une réduction des coûts substantielle par rapport à ceux qu'occasionnent la mise en place des dispositifs existants. Le câble peut avantageusement être un câble double, comme représenté en coupe sur la figure 5, formé par deux câbles collés et séparables par déchirure. Les deux câbles peuvent être identiques ou l'un et/ou l'autre peut être blindé. Chaque câble simple comprend un certain nombre de paires.

Les modules 2 sont regroupés dans les locaux de sous-répartition B et, éventuellement, dans les locaux techniques pour former des ensembles compacts appelés sous-répartiteurs (chiffre de repère 15 sur la figure 2). Selon une caractéristique de l'invention, ces modules sont mixtes et sont connectés à la fois à des paires de fils téléphoniques et à des paires de fils informatiques. Les contacts informatiques de deux modules 2 peuvent être reliés par un cordon de brassage 3, comportant un connecteur 4 approprié à chacune de ses extrémités, permettant d'établir une liaison informatique entre n'importe quel couple de postes de travail. Les contacts téléphoniques de chaque module sont reliés au moyen de paires de fils fixes 5 à des premiers modules 6 d'un répartiteur téléphonique général situé dans un central téléphonique C. Dans ce central, un ensemble de seconds modules 7 est connecté de façon fixe à un autocommutateur 8. Une liaison peut être établie entre n'importe quel module 6 et n'importe quel module 7 au moyen d'un cordon de raccordement 9 appelé "jarrettière".

Sur la figure 2, on a représenté un sous-ensemble agrandi de la figure 1, comprenant un poste de travail A1 et le local de sous-répartition B ou le local technique dont il dépend. Le poste de travail A1 comporte typiquement une prise informatique 10, deux prises téléphoniques 11 et trois prises de courant basse tension 12, dont une au moins est prévue pour l'alimentation de matériel informatique (prise munie d'une terre). Le poste de travail A1 peut comporter en outre deux prises téléphoniques 11' supplémentaires destinées à l'alimentation de postes de travail satellites A1' et A1''. Les prises téléphoniques 11, 11' et informatique 10 sont connectées à l'extrémité d'un câble 1 comportant le nombre de paires de fils correspondant (soit cinq paires dans ce cas). Les paires de fils téléphoniques sont blindées de façon que les courants d'appel ne perturbent pas les liaisons informatiques. A son autre extrémité le câble 1 est connecté à un module de raccordement mixte 2 comportant une série de contacts réservés aux connexions informatiques et une série de contacts réservés aux connexions téléphoniques. Au sens de l'invention, l'ensemble formé par les prises informatiques 10 et téléphoniques 11, 11', le câble 1 et le module 2, constitue un élément de précâblage unique qui est entièrement fabriqué et contrôlé en usine. Il est à noter que c'est l'utilisation de modules 2 mixtes qui permet cette préfabrication.

Le local de sous-répartition B comporte un sous-répartiteur 15 constitué de la réunion d'un nombre variable de modules de raccordement. Les modules sont assujettis, avantageusement par encliquetage, à au moins un rail métallique de support 13 raccordé à la terre. Sur la figure 2, on a représenté deux rails 13. Sur le rail de gauche sont regroupés les modules 2 des éléments de précâblage (pour des raisons de clarté, seul le câble 1 desservant le poste de travail A1 a été représenté). Aux modules 2 sont connectées des paires téléphoniques 5 qui sont filées jusqu'au répartiteur du central téléphonique. Les prises de branchement informatique des différents postes de travail peuvent être connectées l'un à l'autre dans le sous-répartiteur 15. A titre d'exemple, on a représenté deux cordons de brassage 3 établissant respectivement une liaison informatique entre deux couples de modules. Sur le rail de droite sont assujettis plusieurs groupes de modules parmi lesquels le groupe central sert à l'etablissement de liaisons informatiques entre deux locaux de sous-répartition B. Ce groupe de modules de relais est relié, par un câble 14 appelé "rocade", à une groupe de modules correspondants situé dans une autre sous-répartiteur ou dans un local technique (centre de calcul, etc.). A titre d'exemple, on a représenté un cordon de brassage 16 reliant un module 2 d'un élément de précâblage à un module de relais fixé au rail de droite.

L'alimentation des postes de travail en courant basse tension es réalisée au moyen d'un bus d'alimentation 30 comprenant un câble 31 auquel sont connectées, à intervalles réguliers, des prises 32. C'est à ces prises que sont branchées des rallonges 33 dont font partie les prises 12 servant à l'alimentation de chaque poste. De même que les éléments de précâblage informatique/téléphonique, le bus 30 est fabriqué en usine et est filé, à la construction ou à la rénovation d'un bâtiment, de façon à pouvoir desservir tous les postes de travail potentiels.

La figure 3 représente un module 2 mixte pour élément de précâblage selon l'invention. Ce module comporte un corps en matière plastique 20 comprenant des pattes d'encliquetage 21 pour sa fixation à un rail 13 métallique comprenant avantageusement une piste conductrice sur sa face avant. Le corps 20 comporte deux rangées d'alvéoles parallèles servant au logement de contacts 23, 23' avantageusement disposés en quinconces, et qui sont connectés aux fils du câble 1 d'un élément de précâblage. Les alvéoles ont toutes la même dimension, mais peuvent recevoir des contacts de formes différentes, selon, en particulier, la section des fils qu'on prévoit de leur connecter (sur la figure, contacts à deux et à trois dents). La disposition en quinconce accroît la distance d'isolement (contacts à haut débit). Ces contacts sont répartis en deux séries, la première série étant dévolue à la connexion de paires de fils de liaison téléphonique et la seconde série à la connexion de fils de liaison informatique. Sur cette seconde série de contacts peut être branché en outre un ou plusieurs connecteurs faisant partie d'un ou respectivement de plusieurs cordons de brassage 3 (un seul connecteur 4, sur la figure 3 ; sur la figure 2, plusieurs modules du répartiteur 15 on été représentés munis de deux connecteurs). Le cordon de brassage peut sortir perpendiculairement du connecteur, comme représenté sur la figure, ou tangentiellement. Aux contacts de la première série, il est prévu de connecter, en outre, des paires téléphoniques reliant le module qu répartiteur téléphonique général C. Comme d'une part, ces paires téléphoniques (repérées par le chiffre 5 sur les figures 1 et 2) sont fixes et pour éviter, d'autre part, qu'un connecteur 4 ne puisse être branché sur les contacts dévolus aux liaisons téléphoniques, chaque module 2 est muni d'un organe de protection interdisant l'accès aux contacts téléphoniques. Cet organe de protection est constitué essentiellement par un obturateur ou cache comprenant une ou plusieurs plaques ayant sensiblement la même largeur que le module 2 et couvrant un certain nombre de contacts et fixées par encliquetage sur les côtés du module, conformés de façon adéquate. La protection peut aussi être assurée par une seule plaque 25 d'obturateur s'étendant sur toute la longueur du module et comprenant un évidement de forme correspondant à celle d'un connecteur 4 de cordon de brassage. Cette plaque est assujettie au module 2 par encliquetage, le corps 20 du module comportant deux bras 22, faisant saillie vers l'extérieur, prévus à cet effet. Ces obturateurs amovibles interdisent le branchement par inadvertance de connecteurs numériques et évitent un mélange intempestif, avec le risque sur une ligne numérique d'une surtension provenant d'une ligne analogique. Le retrait d'un cache permet une transformation d'une ligne analogique en une ligne numérique, c'est-à-dire accessible par un connecteur. Les lignes analogiques sont câblées. Avantageusement, le module comporte à chaque extrémité des passe-fils 31, 32. Chacun regroupe tous les fils arrivant sur une face. Une face recoit les fils provenant des postes de travail, l'autre face les fils conduisant au répartiteur de l'autocommutateur. Au moins une face du module peut être formée avec un passe-fils 33 constitué par une nervure longitudinale avec un trou en regard de chaque contact. Cela permet de peigner le câble pour avoir une disposition ordonnée et visible des fils, comme représenté pour deux fils 35, 36 sur la figure 3. En plus des contacts numériques pour l'informatique et analogiques pour le téléphone, le module peut prévoir des paires de contacts supplémentaires pour des connexions spécifiques : automatismes, téléalimentations, etc...

Avec ce dispositif, le téléphone analogique est transformable en numérique sans aucune modification de l'installation. La face avant du module peut recevoir un porte étiquettes identifiant le poste de travail.

L'évacuation des courants parasites (dus à l'électricité statique notamment) au niveau d'un module 2 se fait au moyen d'un drain d'écran constitué d'une lame métallique souple 26 asujettie à la face arrière du corps 20 du module, lame métallique qui vient en contact du rail 13, lui-même relié à la terre, lorsque le module est encliqueté sur le rail. A cette lame, est connecté le drain de masse du câble.

La présente invention n'est pas limitée à l'exemple de réalisation qui vient d'être décrit ; elle est, au contraire, susceptible de modifications et de variantes qui apparaîtront à l'homme de l'art.

**Revendications**

1. Elément de précâblage téléphonique et informatique comportant :
· un câble (1) comprenant au moins une paire de fils pour l'établissement d'une liaison téléphonique et au moins une paire de fils pour l'établissement d'une liaison informatique,
· au moins une prise (11) pour le branchement d'un matériel téléphonique et au moins une prise (10) pour le branchement d'un matériel informatique, lesdites prises étant connectées à une extrémité des paires de fils correspondantes du câble (1), et
· un module de raccordement (2) comprenant au moins autant de paire de contacts (23) que le câble (1) comprend de paires de fils, lesdites paires de fils informatiques et téléphoniques étant connectées aux contacts du même module.

2. Elément de précâblage selon la revendication 1, caractérisé en ce que le câble est un câble double, constitué par deux câbles collés, séparable par déchirure.

3. Elément de précâblage selon la revendication 2, caractérisé en ce que l'un des deux câbles est blindé.

4. Elément de prècâblage selon une des revendications précédentes, caractérisé en ce que le module (2) d'un élément de précâblage comporte au moins deux sortes de contacts (23) pour la connexion de fils d'au moins deux sections différentes.

5. Elément de précâblage selon un des revendications précédentes, caractérisé en ce que le module de raccordement (2) comporte un organe de protection amovible (25) interdisant l'accès aux contacts (23) connectés à des fils de liaison téléphonique.

6. Elément de précâblage selon une des revendications précédentes, caractérisé en ce que le module de raccordement (2) comporte un contact de drain d'écran du câble formé d'une lame métallique souple (26) pour entrer au contact d'une structure métallique reliée à la terre, fixé indépendamment sur le plastique du module, connecté au drain de masse du câble.

7. Elément de précâblage selon une des revendications précédentes, caractérisé en ce que le module comporte un passe-fils large (31, 32) à chaque extrémité et un passe-fil (33) sur au moins une face, formé par une nervure avec un trou en regard de chaque contact.

8. Elément de précâblage selon une des revendications précédentes, caractérisé en ce que les contacts du module sont disposés en quinconce.

9. Bâtiment comportant un nombre de poste de travail et un local de sous-répartiteur, chaque poste de travail étant relié au local de sous-répartiteur par un élément de précâblage selon une des revendications précédentes, les modules de raccordement étant rassemblés dans le local pour constituer le sous-répartiteur.

10. Bâtiment selon la revendication 9, caractérisé en ce que chaque poste de travail comporte en outre au moins une prise d'alimentation basse tension (12) reliée à un bus (20) d'alimentation basse tension.

## Fig.1

## Fig.3

fig 5

fig 4

# fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X, D | FR-A-2609218 (LEPAILLIER)<br>* page 5, ligne 25 - page 6, ligne 36; revendications 1-3; figures 1-3, 6 *<br>--- | 1, 9, 10 | H02G3/00 |
| A | DE-A-2353865 (SIEMENS)<br>* page 1, ligne 25 - page 3, ligne 20 *<br>----- | 1, 4, 9, 10 | |

|  |  |
|---|---|
| | DOMAINES TECHNIQUES RECHERCHES (Int. Cl.4) |
| | H02G |

Le présent rapport a été établi pour toutes les revendications

| Lieu de la recherche | Date d'achèvement de la recherche | Examinateur |
|---|---|---|
| LA HAYE | 30 MARS 1989 | RIEUTORT A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)